# EUROPEAN PATENT APPLICATION

(11) **EP 2 371 685 A2**
(43) Date of publication of application: **05.10.2011**
(21) Application number: 11158610.3
(22) Date of filing: 17.03.2011
(51) Int. Cl.: B62J 1/00, B62J 1/08

(54) **Ergonomic bike seat and fixation system for such a bike seat**

(30) Priority: 26.03.2010 BE 201000202; 19.07.2010 BE 201000446
(71) Applicant: Dieusaert, Jan, 8670 Koksijde (BE)
(72) Inventor: Dieusaert, Jan, 8670 Koksijde (BE)
(74) Representative: Ostyn, Frans

(57) **Abstract**

The object of the present invention is to produce a bicycle saddle which does not cause saddle soreness, by combining the following elements: an ergonomic shape, a supporting saddle surface which is as large as possible, a suitable padding and a securing rail (30) having resilient properties.

## Description

The present invention, on the one hand, relates to a saddle of ergonomic design, in particular intended for use with a bicycle, but which can also be used in other applications (seating unit, public transport, fitness apparatus, etc.) with the intention of ensuring excellent sitting and riding comfort and, more specifically, to eliminate the phenomenon of saddle soreness during cycling. On the other hand, the present invention relates to a securing system which can be secured to all kinds of objects, such as for example seating units, fitness apparatus, etc. The respective securing system is in particular suitable for attaching the ergonomic bicycle saddle according to the invention to a bicycle frame.

Saddle soreness is a very common inconvenience, both with professional cyclists and recreational (occasional) cyclists, which means that the choice of the correct saddle is very important. However, the known saddles result in numerous problems; medical studies conducted by universities show that:
- 64% of cyclists suffer from saddle soreness;
- Prolonged cycling (from 3 hours per week) may cause erectile dysfunction and possibly even impotence;
- On average, the blood circulation in the penis drops by 70% after 10 minutes of cycling.

In this connection, various factors play a part, the most important of which are:

### 1) The sit bones

When cycling, the body weight largely rests on the sit bones (2). If these are insufficiently or asymmetrically supported by the saddle, the surrounding connective tissue is subjected to increased pressure and the blood vessels, tendons and nerve bundles are pinched off, resulting in saddle soreness.

### 2) The symphysis of the pubic bone (crotch)

The sit bones (1) are joined to the pubic bones (3) which are fused together at the location of the crotch to form the pubic bone symphysis (4). The pubic bone symphysis (4) and the tailbone (5) form the ends of the perineum (the zone between the external genitalia and the anus). This perineal zone contains Alcock's canal with its important blood vessels and nerve bundles (nervus pudendus).

During cycling, these blood vessels and nerves are squeezed at the location of the pubic bone, as a result of which the blood supply to the penis is impeded and a "numb" feeling results in the private parts. In time, this may damage the corpus cavernosum and lead to erectile dysfunction and even impotence. It is a fact that erectile dysfunction is more common among racing cyclists (according to estimates, the figure is at least 5%) and that cycling aggravates prostate complaints.

In women, cycling also leads to a painful pressure on the pubic bone and potential damage to the nerves of the clitoris. The reduced blood supply may cause hardening of the genital arteries, resulting in a reduced orgasm. Also, the friction of the labia which are crushed between the saddle and the pubic bone, as it were, can cause painful irritations.

### 3) The tailbone (coccyx)

If the saddle is not suitably adapted, the tailbone (coccyx) (5) can also be subjected to increased pressure and lead to saddle soreness.

### 4) Lower back pain

A saddle which is not suitably adapted results in an incorrect posture and lower back pain. However, a good saddle induces a slightly forward bent position. The resulting forward tilt of the pelvis reduces the curvature of the back, relieves the lumbar vertebrae (6) and the strain on the ligaments and thus prevents lower back pain.

### 5) Skin damage

The constant rubbing of the posterior across the saddle produces friction, heat and results in excessive perspiration, as a result of which the skin becomes irritated and inflamed, sometimes until bleeding occurs. The excessive pressure at the location of the sit bones (2), the pubic bone (4) and the tailbone (5) can also damage the skin.

It can be inferred from the above facts that the sit bones (2) have a supporting function, while the load on the pubic bone symphysis (4) and the tailbone (5) should be reduced as much as possible, as excessive pressure on these zones can lead to saddle soreness.

Numerous patent publications claim a bicycle saddle design which purports to eliminate the phenomenon of saddle soreness, but the enormous proliferation of all kinds of bicycle saddle models is indirect proof that the ideal solution has yet to be found. In addition, the proposed solutions often cause new problems, as a result of which the remedy is sometimes worse than the disease.

Some saddles, as described in patent US 7699391, are provided with a cutout (groove) at the position of the pubic bone in order to reduce the pressure on the perineum. However, such saddles are not very efficient since certain veins are not located above the cutout itself, but run sideward and consequently are pinched off even more by the edges of the cutout. In addition, this significantly reduces the supporting surface of the saddle, resulting in an increased point load of the sit bones and the pubic bone.

Gel saddles, as described in patent US 6886887, in which the saddle surface is locally provided with a gel pad. Such gel saddles are soft and comfortable during the first few kilometres, but after some time, saddle soreness often sets in with great intensity. The softer the saddle, the deeper the sit bones will sink into it and the more tendons, nerves and blood vessels are pinched off. A gel saddle also feels hot and can cause the posterior to warm up. In addition, gel saddles easily become deformed and damaged during use.

Leather saddles have the advantage that they adapt to the shape of the posterior. However, they have the drawback that they have to be broken in for a relatively long period of time, are relatively susceptible to moisture, have to be treated regularly with saddle grease and are relatively expensive to buy. In addition, leather does not offer the same freedom of design as modern plastics.

With saddles having a long and wide saddle nose, the inside of the thighs rubs against the side of the saddle nose, resulting in a waste of energy, heat and chafing wounds. Omitting the saddle nose, as is described in patent US 7083229 is the wrong solution, as the saddle nose is essential with regard to steerability, stability and safety, in particular when going around bends and looking backwards.

According to the prior art, it is standard practice to increase the saddle edge with respect to the central seat part, leading to improved contact between the periphery of the saddle and the posterior, which results in a better distribution of pressure and consequently also reduces the load on the sit bones.

However, an increase in the front saddle edge severely impedes the pedalling movement of the legs when cycling. After all, a bicycle saddle is not a static concept like a chair or an armchair, but rather a dynamic concept which has to take the locomotion which is specific to cycling. In particular the local pressure of the saddle edge against the hamstring tendon can be particularly unpleasant and painful. This is the case with patent US 7083229 in which a bicycle saddle is described which is in the shape of a round disc having raised side edges. For this reason, the front saddle edge is not raised in practice, but rather lowered, as a result of which the saddle displays a certain inclination in the longitudinal direction and the torso assumes a more forward bent position.

Furthermore, such a suspension is essential to the riding comfort in general and to preventing saddle soreness in particular, especially when cycling on rough terrain. The use of thick tyres and a telescopic fork and saddle pin has a significant shock-absorbing effect and therefore many modern bicycle saddles such as that described in patent US 6149230 only consist of a rigid saddle plate combined with padding, but without additional suspension.

Sometimes, the saddle plate consists of a more resilient material, such as polyamide or polypropylene which impart a certain elasticity to the saddle when riding across rough terrain and overcoming obstacles. However, the sides of such a saddle will repeatedly bend vertically, as a result of which the pubic bone and the tailbone will be subjected to great impacts, ultimately causing saddle soreness.

At the posterior of the saddle plate, most bicycle saddles have a V-shaped securing rail made in one piece, the tip of which is fixed at the position of the saddle nose and the two ends of which are fixed symmetrically at the position of the edge of the rear saddle part. With a traditional bicycle saddle, the saddle is fixed by means of two coiled springs, while the tip of the rail, at the location of the saddle nose, is connected to the saddle plate in a rigid manner: see for example US 2225316, US 3884525 or US 6045180.

However, such a concept has the drawback that only the rear saddle part moves up and down when riding across rough terrain, with the saddle nose in each case being situated at a relatively higher level than the rear side of the saddle and the pubic bone having to absorb strong impacts, resulting in saddle soreness.

Patent publications US 6343836 and EP 2003046 A2 show a suspension formed by leaf springs.

Patent publication US 2169105 shows a third coiled spring at the location of the saddle nose.

Patent publication GB 190806596 shows a combination of traditional coiled springs at the rear of the saddle with an additional coiled spring beneath the saddle nose and leaf springs underneath the saddle.

Patent publications US 0660215 and GB 0861994 show a very unorthodox and irregular structure of a securing rail in which the rail itself forms the resilient element.

Patent publication US 2331213 shows a complex system which combines various types of suspensions. The saddle cover itself is supported by a dense network of horizontal coiled springs which extend lengthwise, the rear part of the seat part has two coiled springs, while the saddle pin is also provided with a telescopic suspension.

With patent publications US 6443524 and DE 202005013749 U1, the rear coiled springs have been replaced by elastomers, in which case the rear saddle part has a shock-absorbing effect which is, however, limited to the vertical direction and does not allow any lateral movement.

Patent publication US 1977962 shows a system in which the ends of the securing rail are fixed to a circular central structure having resilient properties which is intended to absorb the shocks and vibrations in all directions. However, it is clear that such a saddle does not permit a stable position, since the saddle will tilt in all directions during cycling.

Patent publication US 7475940 shows a cutout in the front central section of the saddle with both ends of the securing rail being situated at the position of the saddle nose and parallel to the cutout, while the securing rail forms an uninterrupted unit at the rear of the saddle.

Patent publications US 6402236 and US 4850643 show a securing rail consisting of two separate, bent elements which are connected to the saddle plate in a rigid manner.

Patent publication US 4773705 shows a securing rail consisting of two separate bars which are bent at right angles both in the horizontal and in the vertical direction, but apart from that contain no resilient elements.

Patent publication US 6523891 shows a saddle with a saddle plate formed by various elements which are placed above one another and which are assembled by means of screws and are provided with grooves in which the securing rails are fixed in a rigid manner.

Some saddles, such as those described in the patent publications US 7628451 and DE 2020007008321 show a local relief elevation of the padding (elastic cushion), but this is wrongly situated above the points of contact of the sit bones themselves, as a result of which the pressure on these sit bones is indeed reduced, but the posterior has an even greater tendency to slide off the saddle.

Patent publication US 6045180 shows a saddle surface with, on the one hand, a seat part having a biconcave profile and, on the other hand, a central crest, running in the longitudinal direction of the saddle. This central crest increases the contact with and the pressure on the perineum and more specifically on the pubic bone symphysis (crotch), resulting in saddle soreness. Moreover, the ends of the front saddle edge protrude in the forward direction and impede the pedalling movement of the legs, in particular with heavy individuals.

It is an object of the present invention to provide a saddle for use with a cycle or for analogous applications, comprising a seat part, a saddle nose and a securing system for attaching the saddle to a bicycle frame which ensures excellent sitting and riding comfort.

The object of the invention is achieved by providing a saddle as described in the attached first claim. The specific embodiment of the securing system will ensure excellent sitting and riding comfort for the user of a saddle with such a securing system.

Preferred embodiments of the saddle are described in the dependent claims.

Another subject of the present invention relates to a securing system as described in independent Claim 11. Preferred embodiments of the securing system are described in the dependent claims. Said securing system is in particular suitable for the attachment of a saddle to a bicycle frame.

In the following detailed description of the bicycle saddle according to the present invention, said features and advantages of the invention are explained in more detail. It will be clear that the sole purpose of this description is to illustrate the general principles of the present invention by means of a concrete example, and that nothing in this description can therefore be interpreted as a limitation of the scope of the patent rights defined in the claims nor of the area of application of the present invention.

In the following description, reference numerals are used to refer to the attached figures, in which:
- ***Fig. 1******:** shows an anatomic representation of the human pelvis with the following reference numbers:*
   *1: sit bones;*
   *2: sit bones (ischial tuberosities);*
   *3: pubic bones;*
   *4: symphysis of the pubic bone (crotch);*
   *5: tailbone (coccyx);*
   *6: lumbar vertebrae;*
- ***Fig. 2******:** shows a top view of the saddle according to the present invention and with the following reference numbers:*
   *7: seat part of the saddle;*
   *8: saddle nose;*
   *9: front edge of the seat part;*
   *10: contact points of the sit bones;*
   *A-B: width of the seat part;*
   *C-D: length of the seat part;*
   *Alpha: the angle formed by the front saddle edge;*
- ***Fig. 3******:** shows a representation of the top view of a racing saddle, in which : E-F is the maximum width of the racing saddle and G-H is the distance between the contact points of the sit bones with a racing saddle;*
- ***Fig. 4****: shows a cross section of the saddle, taken in the longitudinal direction at the location of the central axis, with:*
   *11: representation of the upper surface relief of the padding;*
   *12: rear saddle edge;*
   *13: rear part of the seat part;*
   *14: padding (cushion);*
   *15: saddle plate;*
   *16: bump-shaped relief elevation of the padding;*
   *17: contact point of the pubic bone symphysis (crotch);*
   *Beta: angle of inclination of the saddle surface in the longitudinal direction of the saddle ;*

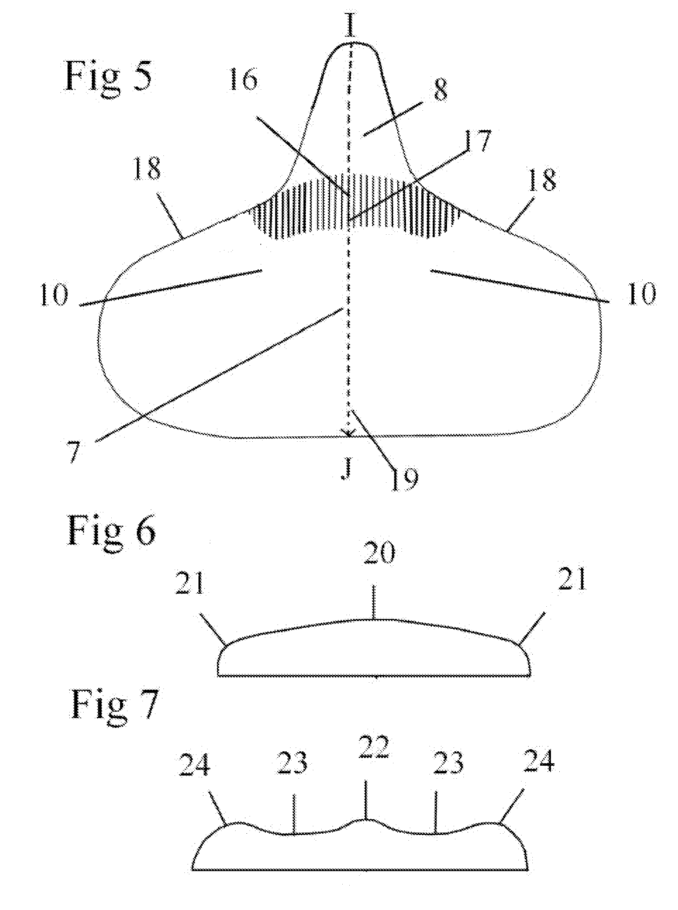

- ***Fig. 5****: shows a top view of the saddle with: 18: contact point of the hamstring tendon with the front saddle edge and 19: contact point of the tailbone (coccyx);*
- ***Fig. 6******:** shows a cross section of a traditional saddle, taken halfway along the seat part and at right angles to the longitudinal direction of the saddle, with 20: highest point of the saddle at the location of the longitudinal axis and 21: lowest point of the saddle at the location of the side edges;*
- ***Fig. 7******:** shows a cross section of a biconcave saddle, taken halfway along the seat part and at right angles to the longitudinal direction of the saddle, with: 22: crest-shaped central ridge running along the longitudinal axis; 23: concave depression and 24: crest-shaped outer saddle edge;*
- ***Fig.: 8*** *shows a representation of the underside of the saddle and the method of attachment of the securing rail to the saddle with the following reference numbers:*
   *25A and 25B: securing rails;*
   *26A, 26B, 26C and 26D: elastomer blocks;*
   *27: common base for the front elastomer blocks 26A and 26C;*
   *28: common base for the rear elastomer blocks 26B and 26D;*
   *29: vertical transverse profile for blocking the front elastomer blocks in the forward direction;*

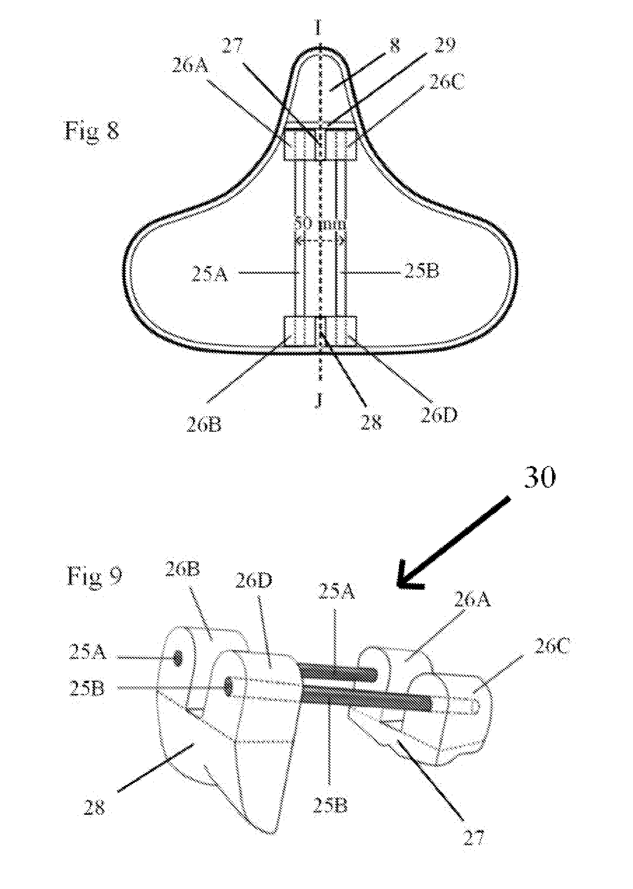

- ***Fig. 9******:** is a separate representation of the securing rails (25A and 25B) and the elastomer blocks (26A,26B,26C,26D) on their common base (26 and 28).*

The object of the invention is achieved by providing a saddle having the following specific features:

### 1) Saddle having a supporting surface which is as large as possible

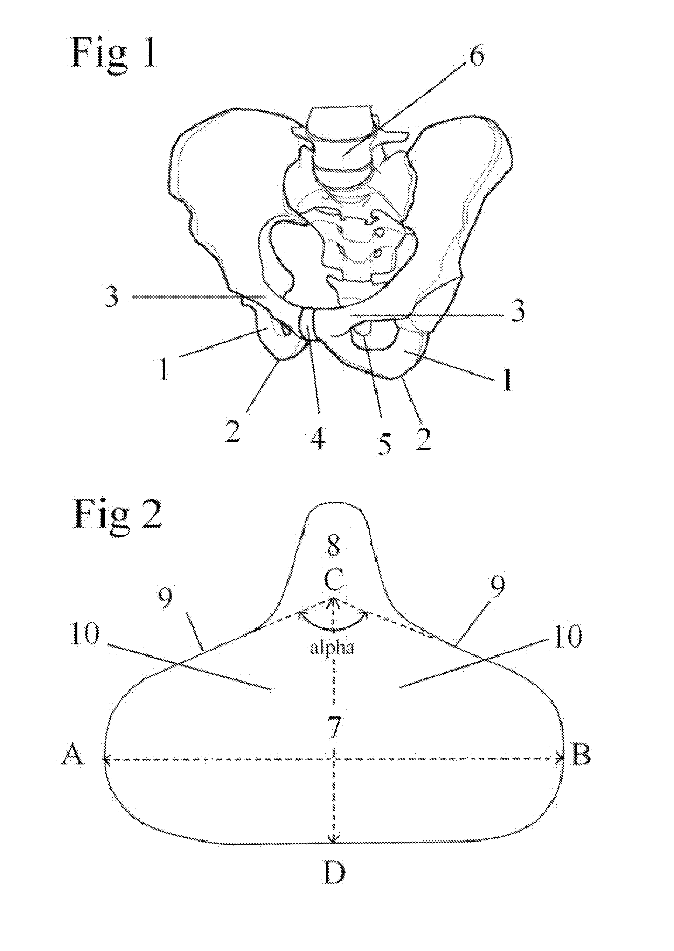

The proposed design of a saddle such as that illustrated in the top view (Fig. 2), on the one hand, comprises a seat part (7) with a supporting function and, on the other hand, a saddle nose (8) which is narrower than said seat part and has no supporting function.

The aim is to produce a seat part (7) having a supporting surface which is as large as possible by combining a maximum possible width A-B, a maximum possible length C-D and finally a blunt saddle shape which is defined by the angle alpha of the front saddle edge. In the proposed design, the seat part (7), on the one hand, has a width A-B of preferably between 22 and 32 cm and in particular of 28 cm and, on the other hand, a length C-D (saddle nose not included) between 10 and 16 cm, and in particular of 14 cm.

The proposed bicycle saddle design thus has a seat part (7), the width A-B of which is approximately twice the length C-D. The angle alpha, formed by the two halves of the front saddle edge, is preferably between 110° and 150° and in particular 130°, as a result of which the freedom of movement of the legs is not impeded during cycling. The greater the contact surface between the saddle and the posterior, the smaller the pressure per unit area and the lower the load on the sit bones (2).

### 2) Saddle offering optimum support of the sit bones

As the body weight is mainly supported by the two sit bones (2), an optimum support of these sit bones and the peripheral zone thereof is extremely important in order to prevent saddle soreness. With men, the sit bones are on average 11 cm apart and with women 13 cm; which in effect means that the average distance is 12 cm.

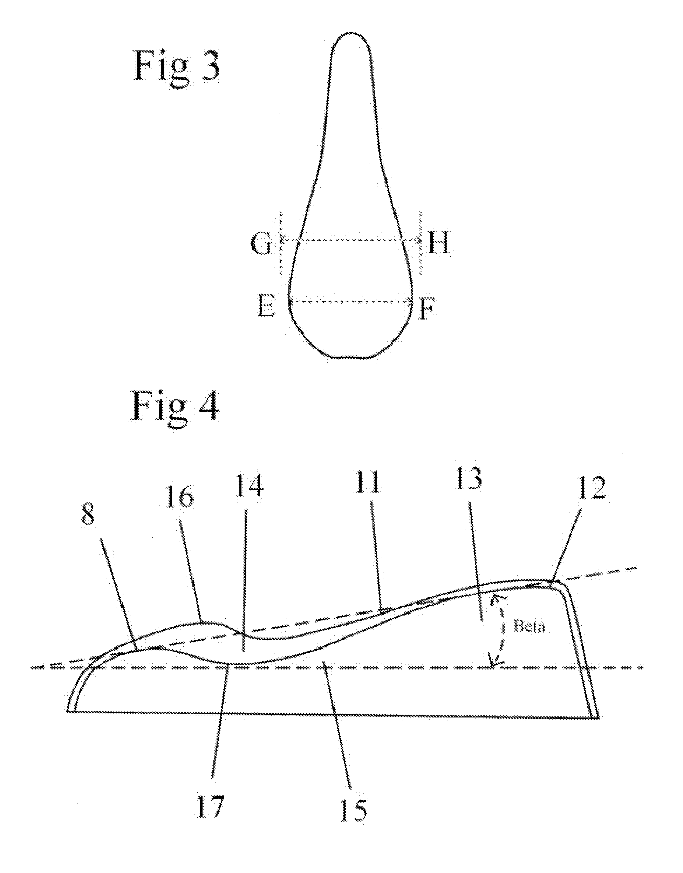

In the proposed design for a bicycle saddle, the contact points of the sit bones (10) and the surrounding zone are situated completely within the saddle surface area and are thus supported well. By contrast, a racing saddle (Fig. 3) is elongate and narrow and the maximum width E-F is relatively small. In the case of a racing saddle, the saddle nose and the seat part form an uninterrupted unit and the contact points of the sit bones G and H even fall completely outside the saddle surface area, as a result of which the body weight will press mainly on the perineal zone and more specifically on the pubic bone symphysis (4), resulting in saddle soreness.

### 3) Saddle having an inclined profile in the longitudinal direction

In the proposed design, the supporting saddle plate (15) has an inclined profile in the longitudinal direction. The rear edge (12) in this case forms the highest point and the saddle nose (8) the lowest point of the saddle plate (15), with an angle of inclination "beta" which is preferably between 8 and 14 and in particular 11 degrees. As a result thereof, the contact between the posterior and the seat part of the saddle (7) is improved and a larger part of the body weight is supported by the rear saddle part, resulting in a reduction of the load on the sit bones (2) and the pubic bone (4).

This inclined profile induces a slightly forward bent body posture, as a result of which a larger part of the body weight is transferred to the handlebars which leads to another reduction in the load on the posterior. The resulting forward tilt of the pelvis reduces the curvature of the back, relieves the lumbar vertebrae, reduces the strain on the ligaments and prevents lower back pain.

The forward bent aerodynamic position of the upper body additionally reduces the air resistance and thus improves the force efficiency. However, as a result of this inclined profile, the posterior develops the particularly unpleasant tendency to slide off the saddle in the forward direction during cycling. This shortcoming is solved by a local bump-shaped relief elevation of the padding (see paragraph 4).

### 4) Saddle having a local bump-shaped relief elevation of the padding.

According to the prior art, it is common practice to provide the saddle surface with an elastic cushion or padding (14) which distributes the pressure of the posterior on the saddle better and reduces the local point load. In the proposed design, the saddle plate (15) is covered in accordance with the prior art with a flexible and resilient padding (14) which has been additionally thickened at the location of the sensitive zones of the sit bones (10), the symphysis of the pubic bone (crotch) (17), the contact point of the front saddle edge with the hamstring tendon (9) and the tailbone (coccyx) (19).

The surface profile of the padding (11) and of the supporting saddle plate (15) together determine the shape and thickness of the padding (14). In order to eliminate the phenomenon of saddle soreness and to ensure riding comfort, it is of vital importance for the contact points of the sit bones (10) and the symphysis of the pubic bone (17) (crotch) to stay in a good position on the saddle during cycling. For this reason, the padding (14) of the proposed design has a bump-shaped relief elevation (16), which is situated in the transition zone between the saddle nose (8) and the seat part (7).

By, on the one hand, lowering the surface profile of the saddle plate (11) at the location of the pubic bone symphysis (17), an excessive load on the pubic bone symphysis (17) and consequently also saddle soreness is prevented. By, on the other hand, raising the surface profile of the padding at the location of the pubic bone symphysis (17), a bump-shaped obstacle (16) is produced which prevents the posterior from being displaced in the forward direction and sliding off the saddle.

This tendency of the posterior to slide off forwards is caused by the forward inclined saddle profile. This local bump-shaped relief elevation (16) corresponding to the hatched section in Fig. 5, is situated symmetrically with respect to the longitudinal axis of the saddle I-J, but is missing at the location of the contact point with the hamstring tendon (18) so as not to obstruct the pedalling movement of the legs during cycling. This bump-shaped relief elevation (16) of the padding (14) thus forms a kind of "ski jump" or "parapet" which prevents the posterior from moving in the forward direction and does not exert painful pressure on the pubic bone, due to the elasticity and thickness of the padding. As a result of its shock-absorbing properties, the padding (14) moreover increases the feeling of comfort and improves the suspension.

### 5) Saddle having an ergonomically profiled front saddle edge

A bicycle saddle is not only a static design intended to provide optimum sitting comfort, but also and mainly a dynamic object, with the locomotion and the freedom of movement of the legs being most important.

The front saddle edge (9) shows a gently inclined and rounded profile, without protrusions, ribs or crests which could impede the pedalling movement of the legs.

### 6) Saddle surface with ergonomic relief

With traditional saddles (Fig. 6), the cross section taken halfway along the longitudinal axis of the saddle usually has a convex shape with sloping side edges (21) with the longitudinal axis of the saddle (20) forming the highest point. This results in an increased contact between the posterior and the central saddle part and thus in an increased pressure on the perineum and more specifically on the sensitive zone of the pubic bone (4), in which case the posterior moreover develops a tendency to slide off the saddle in the lateral direction. This sliding-off tendency causes friction, heat, excessive perspiration, skin damage and loss of energy.

The more modern saddle type (Fig. 7) has a central crest (22) in the longitudinal direction and two biconcave depressions (23) in the seat part (7), which results in an increased pressure on the perineum. In addition, this biconcave saddle shape impedes the lateral freedom of movement of the posterior, resulting in reduced circulation of the tissues and saddle soreness.

In the proposed design, the upper surface of the saddle has a virtually flat relief in the transverse direction, with the side edges remaining at virtually the same height as the central part of the saddle, so that the perineum is relieved. In addition, the pressure is distributed more towards the sides and the rear edge of the saddle and this reduces the pressure on the perineum and consequently also the risk of saddle soreness.

### 7) Saddle having a short and narrow saddle nose

The saddle nose (8) is indispensible for maintaining balance, for the steerability and the stability during cycling, particularly when going through bends and looking backwards.

In the proposed design, the saddle nose, which does not have any supporting function otherwise, preferably has a length of between 6 and 12 cm and in particular of 9 cm. Due to this relatively short and narrow saddle nose in the proposed design, there is very little contact between the inside of the thighs and the sides of the saddle nose during cycling, as a result of which friction, waste of energy, heat and skin damage are prevented, even at elevated pedalling frequencies.

### 8) Securing rail with polyvalent suspension

The proposed design (Fig. 8) shows a securing rail comprising two separate straight bars (25A and 25B), the four ends of which are each separately contained (fixedly secured) in separate elastomer blocks (26A, 26B, 26C and 26D). These four elastomer blocks (26A, 26B, 26C and 26D) are situated in a common plane and are symmetrical and parallel with respect to the longitudinal axis 1-J of the saddle.

With each pedalling movement, such a securing rail with four separate elastomer blocks (26A, 26B, 26C and 26D) results in a lateral tilting movement of the saddle, alternately to the left or right. The saddle thus moves along with the pelvis in a harmonic manner, resulting in a reduction in the load on the hip joint, the knees and the lower back vertebrae.

As a consequence, the saddle can moreover be positioned slightly higher, as a result of which the legs are stretched further and the force efficiency is improved. The more intense the pedalling movement and the greater the physical effort, the more pronounced this tilting effect becomes and the more efficient the system is.

The elastomer blocks (26A, 26B, 26C and 26D) are arranged in pairs on common bases (27 and 28) which are themselves attached to the underside of the saddle plate, in which the one common base (27) with the two front elastomer blocks (26A and 26C) is attached at the location of the saddle nose and the other common base (28) with the two rear elastomer blocks (26B and 26D) is attached at the location of the rear saddle edge. In addition, when riding across rough terrain, the elastomer blocks (26A, 26B, 26C and 26D) are compressed in a vertical direction, resulting in a shock-absorbing effect, in which case the entire saddle moves up and down in an even manner without a change in the angle of inclination of the saddle and therefore without any additional load on the perineal zone and the pubic bone symphysis.

At the location of the transition between the seat part (7) and the saddle nose (8), the underside of the saddle has a vertical transverse profile (29), situated at right angles to the longitudinal axis I-J of the saddle, wherein this transverse profile (29), on the one hand, prevents the displacement of the first and third elastomer blocks (front two elastomer blocks 26A and 26C) in the forward direction, but on the other hand is not fixedly connected thereto (but may be in contact therewith), so that the movement of the first and third elastomer blocks (front two elastomer blocks 26A and 26C) in the transverse direction is not impeded.

The simple concept of such a securing rail comprising two separate straight bars can moreover be readily achieved and inexpensively produced.

## Claims

1. Saddle for use with a cycle or for analogous applications, comprising a supporting saddle plate (15) with a seat part (7) and a saddle nose (8) which is narrower than said seat part, and a securing system (30) for attaching the saddle to a bicycle frame, **characterized in that** the securing system (30) is formed by two separate straight bars (25A;25B), both situated in the same plane, in which these bars (25A;25B) are one another's mirror image in relation to the longitudinal axis (I-J) of the saddle and in which each end of the bars (25A;25B) is fixed in a separate elastomer block (26A,26B,26C,26D) with resilient properties.

2. Saddle according to Claim 1, **characterized in that** the securing system (30) comprises four elastomer blocks in which, on the one hand, the front end of the one bar (25A) is contained in a first (front) elastomer block (26A) and the rear end in a second (rear) elastomer block (26B), and, on the other hand, the front end of the other bar (25B) is contained in a third (front) elastomer block (26C) and the rear end in a fourth (rear) elastomer block (26D).

3. Saddle according to Claim 1 or 2, **characterized in that** the ends of said bars (25A;25B) of the securing system are connected to the respective elastomer blocks (26A,26B,26C,26D), either in a mechanical way or by adhesive bonding.

4. Saddle according to one of the preceding claims, **characterized in that** the four elastomer blocks (26A,26B,26C,26D) are arranged in such a manner that they are completely detached and individually deformable.

5. Saddle according to one of the preceding claims, **characterized in that** the elastomer blocks (26A,26B,26C,26D) are elastically deformable in the horizontal direction, at right angles to the longitudinal axis (I-J) of the saddle, so that the combination of elastomer blocks enable the saddle to perform a lateral tilting movement during cycling, alternately to the left or to the right and in harmony with the movement of the pelvis of a user.

6. Saddle according to one of the preceding claims, **characterized in that** the elastomer blocks (26A,26B,26C,26D) are elastically deformable in the vertical direction, at right angles to the longitudinal axis (I-J) of the saddle, so that these elastomer blocks (26A,26B,26C,26D) act as shock absorbers while riding across rough terrain.

7. Saddle according to one of the preceding claims, **characterized in that** the four elastomer blocks (26A,26B,26C,26D) are fixed in pairs to common bases (27 and 28) which form a connection between the respective elastomer blocks (26A,26C;26B,26D) on the one hand and the underside of the saddle plate (15) on the other hand, in which the one common base (27) with the first and third elastomer blocks (26a and 26c) is attached to the underside of the saddle plate (15) at the location of the saddle nose (8) and the other common base (28) with the second and fourth elastomer blocks (26b and 26d) is attached to the underside of the saddle plate (15) at the location of the rear saddle edge.

8. Saddle according to one of the preceding claims, **characterized in that** the underside of the saddle plate (15), at the location of the transition between the saddle nose (8) and the seat part (7), has a vertical profile (29), which is situated symmetrically and at right angles to the longitudinal axis I-J of the saddle, which, on the one hand, prevents displacement of the first and the third elastomer blocks (26A and 26C) in the forward direction and on the other hand is not connected to these elastomer blocks 26A and 26 C, so that the displacement of the securing system (30) in the direction at right angles to the longitudinal axis I-J of the saddle is not impeded.

9. Saddle according to one of the preceding claims, **characterized in that** the saddle furthermore comprises an elastic cushion or padding (14) of suitable shape and thickness which completely or partially covers the saddle plate (15), **in that** said elastic cushion or padding (14) locally has a bump-shaped relief elevation (16), situated in the transition zone between the saddle nose (8) and the seat part (7), **in that** said bump-shaped relief elevation (16) runs symmetrically with respect to the longitudinal axis of the saddle (I-J), but is completely missing on the outer parts of the front saddle edge (18) in order not to obstruct the hamstring tendon and the quick pedalling movement of the legs during cycling, as a result of which said bump-shaped relief elevation (16) of the padding thus forms a kind of buffer or parapet which prevents the posterior of a user sliding off in a forward direction.

10. Saddle according to one of the preceding claims, **characterized in that** the seat part (7) has a width A-B between 22 and 32 cm, preferably 28 cm, corresponding to the width and the anatomical shape of the posterior, which means that the contact points of the sit bones (10) and the surrounding zone are well supported and a maximum supporting saddle surface is produced, resulting in a reduction in the pressure per unit area and in the pressure on said sit bones (10).

11. Securing system, **characterized in that** the securing system comprises two symmetrically arranged straight bars (25A;25B) and four elastomer blocks (26A,26B,26C,26D), in which each of the ends of said bars is fixed in a different elastomer block.

12. Securing system according to Claim 11, **characterized in that** the ends of the one bar (25A) are contained in a first (26A) and a second elastomer block (26B), respectively, and in which the ends of the other bar (25B) are contained in a third (26C) and a fourth elastomer block (26D), respectively.

13. Securing system according to Claim 12, **characterized in that** the first and third elastomer blocks are connected to one another by means of a first common base, and **in that** the second and fourth elastomer blocks are connected to one another by means of a second common base.

14. Securing system according to one of Claims 11 to 13, **characterized in that** said securing system is suitable for attaching a saddle to a bicycle frame.
